# EUROPÄISCHE PATENTSCHRIFT

(11) **EP 1 101 678 B1**
(45) Veröffentlichungstag und Bekanntmachung des Hinweises auf die Patenterteilung: **12.12.2007**
(21) Anmeldenummer: 00125063.8
(22) Anmeldetag: 17.11.2000
(51) Int. Cl.: B60T 8/36, B60T 13/68, F16K 31/06, F16K 15/14, F16J 15/32

(54) **Magnetventil mit einem Rückschlagventil**
ELECTROMAGNETIC VALVE WITH NON-RETURN VALVE
ELECTROVANNE AVEC CLAPET ANTIRETOUR

(30) Priorität: 20.11.1999 DE 19955886
(43) Veröffentlichungstag der Anmeldung: 23.05.2001
(73) Patentinhaber: ROBERT BOSCH GMBH, 70442 Stuttgart (DE)
(72) Erfinder: Gruschwitz, Peggy, 70329 Stuttgart (DE); Oehler, Martin, 74189 Weinsberg (DE); Bauer, Heike, 70376 Stuttgart (DE); Nicodemus, Rolf, Dr., 74321 Bietigheim-Bissingen (DE)

(56) Entgegenhaltungen:
- WO-A-98/40258
- DE-A- 19 635 690
- DE-U- 8 705 153
- FR-A- 1 591 266
- GB-A- 1 148 885
- US-A- 3 854 737

## Beschreibung

### Stand der Technik

Die Erfindung geht aus von einem Magnetventil nach der Gattung des Patentanspruchs 1.

Es ist schon ein derartiges Magnetventil bekannt (DE 196 35 690 A1), bei dem das Rückschlagventil einen starren kugelförmigen Schließkörper aufweist, dem ein hohlkegelförmiger Ventilsitz in einem Ventilbauteil zugeordnet ist. Da das Ventilbauteil aus thermoplastischem Kunststoff gespritzt ist und eine ungleichförmige Massenverteilung aufweist, treten bei der Herstellung und beim Fügen mit dem Magnetventil in das Gehäuse eines Hydroaggregates Formabweichungen des Ventilsitzes auf, welche bei niedrigen Drücken zu Dichtheitsproblemen am Rückschlagventil führen.

Aus der WO98/40258 ist bereits ein Magnetventil bekannt, welches einen stabförmigen Grundkörper zum Einsetzen in eine gestufte Bohrung eines Hydraulikblocks aufweist. Dieser wird von einem Ventilstößel durchgriffen und an dessen einem Anker abgewandten Stirnende ist eine topfförmige Hülse angebracht, an deren Boden ein Ventilsitz des Magnetventils ausgebildet ist.

### Vorteile der Erfindung

Das erfindungsgemäße Magnetventil mit den Merkmalen des Patentanspruchs 1 ist insofern vorteilhaft, als der elastische Schließkörper auch bei niedrigen Drücken das Rückschlagventil sicher schließt, da der Schließkörper bereits bei niedrigen Drücken in der Lage ist, Formabweichungen des Ventilsitzes auszugleichen. Der Schließkörper zeichnet sich in vorteilhafter Weise dadurch aus, daß er ein kostengünstiges und bewährtes handelsübliches Bauteil ist.

Durch die in den Unteransprüchen aufgeführten Maßnahmen sind vorteilhafte Weiterbildungen und Verbesserungen des im Patentanspruch 1 angegebenen Magnetventils möglich.

Mit der im Anspruch 2 angegebenen Ausgestaltung des Magnetventils ist ein Druckmittelweg zum Sitzventil vorgegeben, zu dem das Rückschlagventil in geometrisch günstiger Anordnung liegt.

Durch die im Anspruch 3 beschriebene Maßnahme ist eine weitgehende Formtreue beim Herstellen des Ventilsitzes des Rückschlagventils erzielt.

### Zeichnung

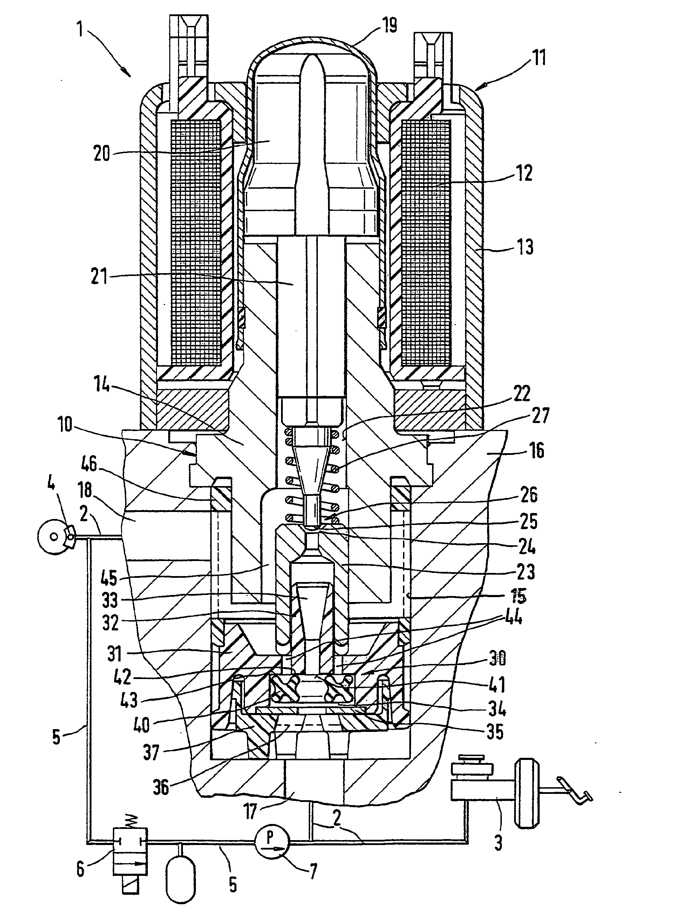

Ein Ausführungsbeispiel der Erfindung ist in der Zeichnung anhand eines Längsschnitts durch ein Magnetventil vereinfacht dargestellt und in der nachfolgenden Beschreibung näher erläutert.

### Beschreibung des Ausführungsbeispiels

Ein in der Zeichnung wiedergegebenes Magnetventil 1 ist in einer nur ausschnittsweise dargestellten schlupfgeregelten hydraulischen Bremsanlage von Kraftfahrzeugen in einer Leitungsverbindung 2 zwischen einem Hauptbremszylinder 3 und einem Radbremszylinder 4 angeordnet. In einer das Magnetventil 1 umgehenden Leitungsverbindung 5 der Bremsanlage sind ein zweites Magnetventil 6 und eine Pumpe 7 angeordnet. Das stromlos offene Magnetventil 1 und das stromlos geschlossene Magnetventil 6 sind Teile einer Einrichtung zur schlupfabhängigen Modulation des im Radbremszylinder 4 wirkenden Bremsdrucks.

Das Magnetventil 1 ist aus zwei Baugruppen gebildet: einem hydraulischen Teil 10 und einem elektrischen Teil 11, der auf den hydraulischen Teil aufgesteckt ist. Der elektrische Teil 11 besteht im wesentlichen aus einer Magnetspule 12 und einem Joch 13. Der hydraulische Teil 10 weist ein Ventilgehäuse 14 auf, das mittels einer Verstemmverbindung in einer Aufnahmebohrung 15 eines Ventilblocks 16 befestigt ist. In die Aufnahmebohrung 15 mündet bodenseitig ein mit dem Hauptbremszylinder 3 in Verbindung stehender Druckmitteleinlaß 17 ein; umfangsseitig geht von der Aufnahmebohrung ein Druckmittelauslaß 18 aus, der mit dem Radbremszylinder 4 in Verbindung steht. Außerhalb des Ventilblocks 16 ist an dem Ventilgehäuse 14 ein vom elektrischen Teil 11 umfaßter Ventildom 19 befestigt. In diesem ist ein längsbewegbar geführter Magnetanker 20 aufgenommen, der mit einem Stößel 21 zusammenwirkt. Der Stößel 21 erstreckt sich in einer Durchgangsbohrung 22 des Ventilgehäuses 14, in der ventildomabgewandt ein hülsenförmiger Ventilkörper 23 sitzt. Dieser weist einen mit dem Druckmitteleinlaß 17 in Verbindung stehenden Ventilsitz 24 auf. Dem Ventilsitz 24 ist ein am Stößel 21 ausgebildetes Schließglied 25 zugeordnet. Der Ventilsitz 24 und das Schließglied 25 bilden ein Sitzventil 26, welches aus der gezeichneten Offenstellung durch Erregung der Magnetspule 12 entgegen der Kraft einer Rückstellfeder 27 in seine Schließstellung überführbar ist.

Für einen schnellen Bremsdruckabbau im Radbremszylinder 4 und insbesondere für den Fall, daß das Magnetventil 1 fehlerhafterweise in seiner Schließstellung verharrt, ist ein im Bypass zum Sitzventil 26 angeordnetes Rückschlagventil 30 vorgesehen. Hierzu ist in der Aufnahmebohrung 15 des Ventilblocks 16 in dem zwischen dem Druckmitteleinlaß 17 und dem Druckmittelauslaß 18 liegenden Raum ein den Bohrungsquerschnitt ausfüllendes Ventilbauteil 31 aufgenommen, welches mit einem zentralen Ansatz 32 passend in den Ventilkörper 23 eingreift. Das aus einem Kunststoff gespritzte Ventilbauteil 31 hat einen in seiner Längsachse verlaufenden Durchlaß 33, der ansatzabgewandt in eine kreiszylindrische Ausnehmung 34 übergeht. Gegen den Druckmitteleinlaß 17 der Aufnahmebohrung 15 hin ist die Ausnehmung 34 durch eine Ringscheibe 35 und eine Filterscheibe 36 in einem ansatzabgewandt auf das Ventilbauteil 31 aufgesteckten Abschlußteil 37 abgeschlossen, der die Ringscheibe 35 in ihrer Lage sichert.

In der kreiszylindrischen Ausnehmung 34 des Ventilbauteils 31 ist mit axialem Bewegungsspiel ein sogenannter Quadring 40 als gummielastischer Schließkörper des Rückschlagventils 30 aufgenommen. Ein Ventilsitz des Rückschlagventils 30 ist von einer Kreisringfläche 41 gebildet, welche die Ausnehmung 34 ansatzseitig begrenzt. Zwischen einer radial inneren Dichtlippe 42 und einer radial äußeren Dichtlippe 43 des Quadrings 14 gehen von der Kreisringfläche 41 mehrere Druckmitteldurchlässe 44 des Ventilbauteils 31 aus, welche parallel zur Längsachse des Ventilbauteils verlaufend kreisringförmig um den Durchlaß 33 herum angeordnet sind. Während der Druckmitteleinlaß 17 durch den Innenraum des Quadrings 40 und den inmitten der Kreisringfläche 41 der Ausnehmung 34 ausgehenden Durchlaß 33 des Ventilbauteils 31 hindurch mit dem Sitzventil 26 und weiter durch einen Durchlaß 45 des Ventilgehäuses 14 hindurch und nach Durchdringung einer auf das Ventilgehäuse aufgesteckten Filterhülse 46 mit dem Druckmittelauslaß 18 in Verbindung steht, ist bei nicht sperrendem Rückschlagventil 30 eine druckmittelleitende Verbindung zwischen dem Druckmittelauslaß 18, durch die das rotationssymmetrisch ausgebildete Ventilbauteil 31 umfangsseitig übergreifende Filterhülse 46 hindurch und weiter durch die Druckmitteldurchlässe 44 und den Innenraum des Quadrings 40 zum Druckmitteleinlaß 17 gegeben. Die letztgenannte Verbindung ist jedoch durch Angriff der beiden Dichtlippen 42 und 43 des Quadrings 40 an der Kreisringfläche 41 des Ventilbauteils 31 abgesperrt, wenn das Magnetventil 1 vom Druckmitteleinlaß 17 über das Sitzventil 26 zum Druckmittelauslaß 18 druckmitteldurchströmt ist.

## Patentansprüche

1. Magnetventil (1), insbesondere für schlupfgeregelte hydraulische Bremsanlagen von Kraftfahrzeugen, mit einem zwischen einem Druckmitteleinlaß (17) und einem Druckmittelauslaß (18) angeordneten Sitzventil (26) und einem im Bypass zum Sitzventil (26) angeordneten Rückschlagventil (30) mit einem Schließkörper (40) und einem Ventilsitz (41), wobei der Ventilsitz des Rückschlagventils (30) eine Kreisringfläche (41) ist, in welche kreisförmig angeordnete Druckmitteldurchlässe (44) münden, **dadurch gekennzeichnet, dass** die Druckmitteldurchlässe (44) radial innen und radial außen von jeweils einer Dichtlippe (42, 43) des ringförmig ausgebildeten, gummielastischen Schließkörpers (40) übergriffen sind, der mit axialem Bewegungsspiel relativ zur Kreisringfläche (41) geführt ist, wobei der Schließkörper ein sogenannter Quadring (40) ist.

2. Magnetventil nach Anspruch 1, **dadurch gekennzeichnet, daß** der Schließkörper (40) in einer kreiszylindrischen Ausnehmung (34) eines aus einem Kunststoff gespritzten Ventilbauteils (31) aufgenommen ist, welches einen von der als Ventilsitz dienenden Kreisringfläche (41) mittig ausgehenden und zum Sitzventil (26) führenden Durchlaß (33) für Druckmittel aufweist.

3. Magnetventil nach Anspruch 2, **dadurch gekennzeichnet, daß** das Ventilbauteil (31) im wesentlichen rotationssymmetrisch ausgebildet ist.

## Claims

1. Solenoid valve (1), in particular for slip-controlled hydraulic brake systems of motor vehicles, having a seat valve (26) which is arranged between a pressure-medium inlet (17) and a pressure-medium outlet (18) and a non-return valve (30) which is arranged in the bypass to the seat valve (26) and has a closing body (40) and a valve seat (41), the valve seat of the non-return valve (30) being a circularly annular face (41), into which pressure-medium passages (44) which are arranged in a circular shape open, **characterized in that** the pressure-medium passages (44) are engaged over radially on the inside and radially on the outside by in each case one sealing lip (42, 43) of the elastomeric closing body (40) of annular configuration which is guided with axial movement play relative to the circularly annular face (41), the closing body being what is known as a quad ring (40).

2. Solenoid valve according to Claim 1, **characterized in that** the closing body (40) is accommodated in a circular-cylindrical recess (34) of a valve component (31) which is injection-moulded from a plastic and has a passage (33) for pressure medium, which passage (33) emanates centrally from the circularly annular face (41) which serves as valve seat and leads to the seat valve (26).

3. Solenoid valve according to Claim 2, **characterized in that** the valve component (31) is of substantially rotationally symmetrical configuration.

## Revendications

1. Electrovanne notamment pour des installations de freins hydrauliques à régulation anti-patinage de véhicules automobiles comprenant une soupape à siège 26 entre l'entrée de liquide sous pression 17 et la sortie de liquide sous pression 18 ainsi qu'un clapet anti-retour 30 installé dans la dérivation de la soupape à siège 26, le clapet ayant un organe de fermeture 40 et un siège de soupape 41,
selon lequel
le siège de clapet anti-retour 30 est une surface en anneau de cercle 41 dans laquelle débouchent des passages de liquide sous pression installés en forme de cercle,
**caractérisée en ce que**
les passages de liquide sous pression 44 sont réalisés radialement à l'intérieur et radialement à l'extérieur, chaque fois chevauchés par une lèvre d'étanchéité 42, 43 de l'organe de fermeture 40 annulaire, élastique comme du caoutchouc, et guidé avec un jeu axial par rapport à la surface annulaire 41,
l'organe d'obturation étant un joint à section en X, 40.

2. Electrovanne selon la revendication 1,
**caractérisée en ce que**
l'organe d'obturation 40 est logé dans une cavité 34 de forme cylindrique circulaire d'une pièce d'injecteur 31 en matière plastique réalisée par injection et qui comporte un passage 33 pour le liquide sous pression, partant de la surface annulaire 41 servant de siège de soupape, au milieu jusqu'au siège de soupape 26.

3. Electrovanne selon la revendication 2,
**caractérisée en ce que**
la pièce 31 est essentiellement symétrique en rotation.
